# EUROPEAN PATENT SPECIFICATION

(11) **EP 2 685 169 B1**
(45) Date of publication and mention of the grant of the patent: **24.10.2018**
(21) Application number: 12176356.9
(22) Date of filing: 13.07.2012
(51) Int. Cl.: F23N 5/24, F23N 1/02, F23N 5/00, G05B 9/02, G05D 11/13

(54) **Method for operating a gas burner**
Verfahren zum Betrieb eines Gasbrenners
Procédé de fonctionnement d'un brûleur à gaz

(43) Date of publication of application: 15.01.2014
(73) Proprietor: Honeywell Technologies Sarl, 1180 Rolle (CH)
(72) Inventor: Blaauwwiekel, Piet, 7841 EB Sleen (NL); Langius, Gerwin, 7772 ZB Hardenberg (NL)
(74) Representative: Sturm, Christoph

(56) References cited:
- EP-A1- 0 666 452
- EP-A1- 0 697 637
- EP-B1- 1 084 369
- EP-B1- 1 179 159
- JP-A- 59 029 915
- JP-A- 60 091 135

## Description

The present patent application relates to a method for operating a gas burner.

EP 1 084 369 B1 and EP 1 179 159 B1 each disclose a method for operating a gas burner. According to this prior art documents, during burner-on phases of the respective gas burner a gas/air mixture having a defined mixing ratio of gas and air is provided to a burner chamber of the gas burner. The gas/air mixture is provided by mixing an air flow provided by an air duct with a gas flow provided by a gas duct using a mixing device. The quantity of the air flow is adjusted by a fan. The defined mixing ratio of the gas/air mixture is controlled by a controller on basis of a signal provided by an electrical or electronic sensor. According to EP 1 084 369 B1, the electrical or electronic sensor is coupled to the gas duct and to the air duct. According to EP 1 179 159 B1, the electrical or electronic sensor is coupled to the gas duct and to a reference point. The electrical or electronic sensor is especially designed as a flow-meter. An actual value corresponding to a pressure ratio between the gas pressure in the gas duct and the air pressure in the air duct or corresponding to a pressure ratio between the gas pressure in the gas duct and the air pressure at the reference point is provided by the electrical or electronic sensor, wherein this actual value is compared with a nominal value. A control variable for a gas valve assigned to the gas duct is generated on basis of the control deviation between the actual value and nominal value, wherein the gas valve is adjusted on basis of this control variable in order to provide the defined mixing ratio of gas and air in the gas/air mixture.

According to EP 1 084 369 B1 and EP 1 179 159 B1, the defined mixing ratio of gas and air of the gas/air mixture is kept constant over the entire modulation range of the gas burner.

In other words, according to the prior art the mixing ratio of the gas/air mixture is kept constant over the entire fan speed range of the fan, either to provide a 1:1 gas-air control having a ratio between the gas pressure and the air pressure of 1:1 over the entire modulation range of the gas burner or to provide a 1:N (N>1) gas-air control having a ratio between the gas pressure and the air pressure of 1:N over the entire modulation range of the gas burner. In both cases a so-called λ-value is usually greater than 1.

EP 0 666 452 A1 discloses another prior art method for operating a gas burner.

Against this background, a novel method for operating a gas burner is provided. The method for operating a gas burner is defined in the claim 1.

If a deviation between the actual output signal of the electrical or electronic sensor and the nominal output signal is greater than a threshold, an improper function of the electrical or electronic sensor, namely a non tolerable change of the sensor gain of the electrical or electronic sensor, is detected. If the deviation between the actual output signal of the electrical or electronic sensor and the nominal output signal is smaller than a threshold, a proper function of the electrical or electronic sensor, namely a tolerable change of the sensor gain or no change of the sensor gain, is detected. If an improper function of the electrical or electronic sensor, namely a non tolerable change of the sensor gain of the electrical or electronic sensor, is detected, the controller initiates at least one defined action, namely the controller performs at least a compensation for the sensor gain shift by a defined offset value.

The novel method for operating a gas burner verifies the function of the electrical or electronic sensor and increases thereby the operation quality of gas burners.

Preferably, if an improper function of the electrical or electronic sensor, namely a non tolerable change of the sensor gain of the electrical or electronic sensor, is detected, the controller blocks a variation of the mixing ratio of the gas/air mixture as a function on the speed of the fan. However, if a proper function of the electrical or electronic sensor, namely a tolerable change of the sensor gain of the electrical or electronic sensor is detected, the controller allows the variation of the mixing ratio of the gas/air mixture as a function on the speed of the fan.

Preferred developments of the invention are provided by the dependent claims and the description which follows. Exemplary embodiments are explained in more detail on the basis of the drawing, in which:

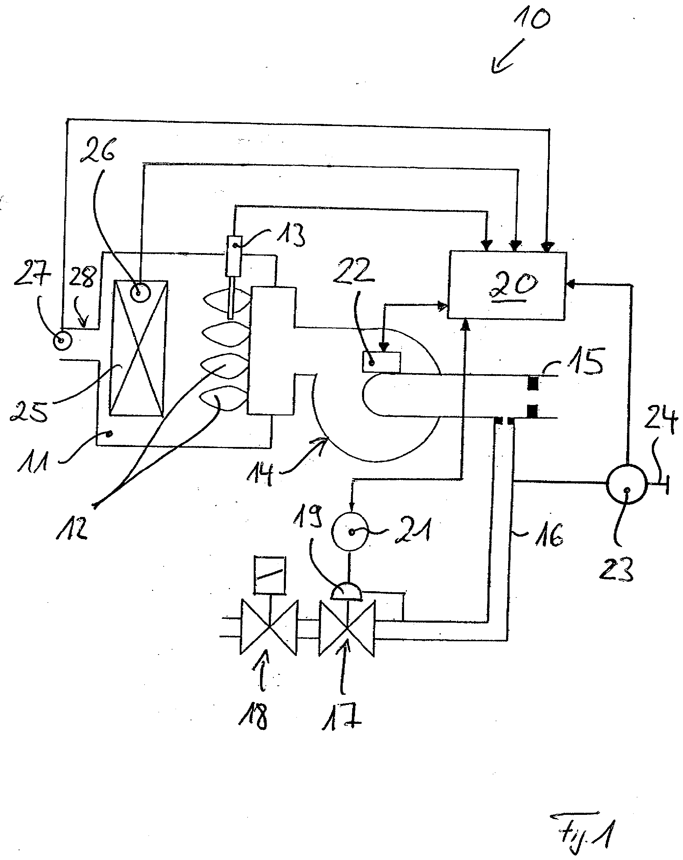

- Figure 1: shows a schematic view of a gas burner.

Figure 1 shows a schematic view of a gas burner 10. The gas burner 10 comprises a burner chamber 11 in which combustion of a gas/air mixture takes place during burner-on phases of the gas burner 10. The combustion of the gas/air mixture results into flames 12 monitored by e.g. a flame ionization sensor 13. The flame ionization sensor 13 is an optional component of the gas burner 10.

The gas/air mixture is provided to the burner chamber 11 of the gas burner 10 by mixing an air flow with a gas flow. A fan 14 sucks in air flowing through an air duct 15 and gas flowing though a gas duct 16.

A gas valve 17 for adjusting the gas flow through the gas duct 16 and a safety valve 18 are assigned to the gas duct 16. The position of the gas valve 17 is adjusted by a pressure regulator 19.

The gas/air mixture having a defined mixing ratio of gas and air is provided to the burner chamber 11 of the gas burner 10. The gas/air mixture is provided by mixing the air flow provided by an air duct 15 with a gas flow provided by a gas duct 16.

The air flow and the gas flow become preferably mixed by a mixing device. Such a mixing device can be designed as a Venturi nozzle (not shown).

The quantity of the air flow and thereby the quantity of the gas/air mixture flow is adjusted by the fan 14, namely by the speed of the fan 14. The fan speed can be adjusted by an actuator 22 of the fan 14.

The defined mixing ratio of the gas/air mixture is controlled by a controller 20 on basis of a signal provided by an electrical or electronic sensor 23. In the shown embodiment, the electrical or electronic sensor 23 is coupled to the gas duct 16 and to a reference point 24. The electrical or electronic sensor 23 is preferably designed as a flow-meter.

An actual value corresponding to a pressure ratio between the gas pressure in the gas duct 16 and the air pressure at the reference point 24 is provided by the electrical or electronic sensor 23. This actual value is compared by the controller 20 with a nominal value stored in the controller 20.

The controller 20 generates a control variable for the gas valve 17, namely for an actuator 21 of the gas valve 17, on basis of the control deviation between the actual value provided by the electrical or electronic sensor 23 and the nominal value stored in the controller 20.

The gas valve position of the gas valve 17 is adjusted by the actuator 21 of the same on basis of this control variable in order to provide the defined mixing ratio of gas and air in the gas/air mixture.

According to Figure 1, the flames 12 resulting form the combustion of the gas/air mixture are used to heat a heat exchanger 25 positioned in the burner chamber 11. A temperature sensor 26 is used to measure a temperature of the heat exchanger 25, especially a temperature of water flowing through the heat exchanger 25. The temperature sensor 26 is an optional component of the gas burner 10.

Exhaust gas resulting from the combustion of the gas/air mixture can exit from the burner chamber 11 though an exhaust pipe 28. An exhaust gas sensor 27 assigned to the exhaust pipe 28 can be used to analyze the emissions of the exhaust gas, especially NOx emissions of the same. The exhaust gas sensor 27 is an optional component of the gas burner 10.

The mixing ratio of gas and air of the gas/air mixture provided to the burner chamber 11 is not kept constant over the modulation range of the gas burner.

The mixing ratio of gas and air of the gas/air mixture provided to the burner chamber 11 is changed as a function on the speed of the fan 14.

Preferably, for fan speeds of the fan 14 being smaller than a lower threshold a gas/air mixture is provided having a mixing ratio of gas and air adapted to provide a stable combustion, especially a stable and secure ignition, of the gas/air mixture. Preferably, for fan speeds being smaller than the lower threshold a gas/air mixture having a mixing ratio of gas and air is provided resulting in a combustion with an almost constant output of the flame ionization sensor 13 or alternatively with an almost constant output of the exhaust gas sensor 27.

Preferably, for fan speeds of the fan 14 being larger than an upper threshold a gas/air mixture is provided having a mixing ratio of gas and air adapted to provide a combustion with reduced emissions. Preferably, for fan speeds being larger than the upper threshold a gas/air mixture having a mixing ratio of gas and air is provided resulting in a combustion with an output of the exhaust gas sensor 27 being smaller that an emission threshold.

Preferably, for fan speeds being larger than the lower thresholds, especially for fan speeds being larger than the lower thresholds and lower than the upper threshold, the mixing ratio of gas and air of the gas/air mixture is freely adjustable as a function of the fan speed of the fan 14. It is possible to use intermediate thresholds between the upper threshold and the lower threshold in order divide this fan speed range into sub-ranges.

Preferably, for fan speeds of the fan 14 being larger than the lower thresholds and lower than the upper threshold a gas/air mixture is provided being leaner than the gas/air mixture which is provided for fan speeds of the fan 14 being larger than the upper threshold. Further on, for fan speeds of the fan 14 being larger than the lower thresholds and lower than the upper threshold a gas/air mixture is provided being leaner than the gas/air mixture which is provided for fan speeds of the fan 14 being smaller than the lower threshold.

Preferably, for fan speeds of the fan 14 being smaller than the lower thresholds a gas/air mixture is provided being preferably leaner than the gas/air mixture of the fan 14 which is provided for fan speeds being larger than the upper threshold. Alternatively, for fan speeds of the fan 14 being smaller than the lower thresholds a gas/air mixture is provided being richer than the gas/air mixture of the fan 14 which is provided for fan speeds being larger than the upper threshold.

It is also possible that for fan speeds being smaller than the lower thresholds a gas/air mixture is provided having the same mixing ratio of gas and air than the gas/air mixture which is provided for fan speeds being larger than the upper threshold.

Preferably, in a first section of the modulation range of the gas burner, namely for fan speeds being larger than the upper threshold, a 1:1 gas-air control having a ratio between the gas pressure and the air pressure of 1:1 is provided. In a second section of the modulation range of the gas burner, namely for fan speeds of the fan 14 being larger than the lower thresholds and lower than the upper threshold, a 1:N (N>1) gas-air control having a ratio between the gas pressure and the air pressure of 1:N is provided. In a third section of the modulation range of the gas burner, namely for fan speeds being smaller than the lower thresholds, a 1:M (N>M>1 or N>M=1 or N>1>M) gas-air control having a ratio between the gas pressure and the air pressure of 1:M is provided. The second section of the modulation range can be divided into subsections by e.g. intermediate thresholds.

As a function of on the fan speed of the fan 14 the controller 20 generates an offset value which becomes added to the nominal value for the signal provided by the electrical or electronic sensor 23.

Alternatively, as a function on the fan speed of the fan 14 the controller 20 generates an offset value which becomes added to control variable for a gas valve 17.

The respective offset value which is a function of the fan speed and which is stored in the controller 20 is freely programmable as a function of the fan speed.

The above variation of the mixing ratio of the gas/air mixture provided to the burner chamber 11 as a function of the speed of the fan 14 is preferably allowed only at defined operating conditions of the gas burner 10.

If the defined operating conditions of the gas burner 10 are not fulfilled, the controller 20 preferably blocks the above variation of the mixing ratio of the gas/air mixture as a function of the speed of the fan 14.

According to a first preferred aspect, the variation of the mixing ratio of the gas/air mixture is only allowed if the heat exchanger temperature measured by the temperature sensor 26 is greater than a temperature threshold. If the temperature of the heat exchanger 25 is below the temperature threshold, the defined mixing ratio of gas and air of the gas/air mixture is kept constant over the entire modulation range of the gas burner 10 and thereby over the entire fan speed range of the fan 14. However, if the temperature of the heat exchanger 25 is above the temperature threshold, the defined mixing ratio of gas and air of the gas/air mixture is not kept constant over the modulation range of the gas burner 10. In this case the mixing ratio of gas and air of the gas/air mixture is variable as a function of the fan speed as discussed above.

According to a second preferred aspect, the variation of the mixing ratio of the gas/air mixture is only allowed if the gas burner 10 has been operated with a defined load for at least a defined time period, especially if the burner load has been greater than a burner load threshold for a time period being greater than a time threshold. If the burner load is below the burner load threshold and/or if the time period is below the time threshold, the defined mixing ratio of gas and air of the gas/air mixture is kept constant over the entire modulation range of the gas burner 10 and thereby over the entire fan speed range. However, if the burner load is above the burner load threshold and if the time period is above the time threshold the defined mixing ratio of gas and air of the gas/air mixture is not kept constant over the modulation range of the gas burner 10. In this case the mixing ratio of gas and air of the gas/air mixture is variable as a function of the fan speed as discussed above.

According to a third preferred aspect, the variation of the mixing ratio of the gas/air mixture is only allowed if the fan speed is stable, especially if the variation of the fan speed is lower than a variation threshold for a time period being greater than a time threshold. If the variation of the fan speed is above the variation threshold and/or if the time period is below the time threshold, the defined mixing ratio of gas and air of the gas/air mixture is kept constant over the entire modulation range of the gas burner 10 and thereby over the entire fan speed range. However, if the variation of the fan speed is below the variation threshold and if the time period is above the time threshold the defined mixing ratio of gas and air of the gas/air mixture is not kept constant over the modulation range of the gas burner 10. In this case the mixing ratio of gas and air of the gas/air mixture is variable as a function of the fan speed as discussed above.

It is possible to use two or all three of the above operating conditions in combination. In this case, the above variation of the mixing ratio of the gas/air mixture provided to the burner chamber 11 as a function of the speed of the fan 14 is allowed only if two of the operating conditions or all three of the operating conditions of the gas burner 10 are commonly fulfilled.

As described above, according to the invention the controller 20 generates a control variable for the gas valve 17, namely for an actuator 21 of the gas valve 17. The actuator 21 of the gas valve 17 can be a stepper motor.

At certain times during burner-on phases, especially in fixed time intervals, the controller 20 checks the function of the electrical or electronic sensor 23, especially the gain of the electrical or electronic sensor 23. In order to check the function of the electrical or electronic sensor 23, the controller 17 generates an input variable for the actuator 21 by which the actuator 21 and thereby the gas valve 17 become operated, especially adjusted by a defined degree or amount. If the actuator 21 is a stepper motor, the controller 20 generates an input variable for the stepper motor by which stepper motor is operated over a defined number of steps.

The output signal provided by electrical or electronic sensor 23 in response to this operation of the actuator 21 and thereby gas valve 17 is compared by the controller 20 with a nominal output signal expected in response to this operation of the actuator 21 and thereby gas valve 17.

If a deviation between actual output signal of the electrical or electronic sensor 23 and the nominal output signal is greater than a threshold, the controller 20 determines an improper function of the electrical or electronic sensor 23, namely a non tolerable change of the sensor gain of the electrical or electronic sensor 23.

If the deviation between actual output signal of the electrical or electronic sensor 23 and the nominal output signal is smaller than the threshold, the controller 20 determines a proper function of the electrical or electronic sensor 23, namely a tolerable change of the sensor gain of the electrical or electronic sensor 23 or no change of the sensor gain.

If the controller 20 determines an improper function of the electrical or electronic sensor 23, namely a non tolerable change of the sensor gain of the electrical or electronic sensor 23, the controller 20 initiates at least one defined action, namely at least a compensation for the sensor gain shift by a defined offset value.

One preferred action initiated by the controller 20 in case the same determines an improper function of the electrical or electronic sensor 23, especially a non tolerable change of the sensor gain, is that the controller 20 blocks the above variation of the mixing ratio of the gas/air mixture provided to the burner chamber 11 as a function of the speed of the fan 14.

Only if the controller 20 determines a proper function of the electrical or electronic sensor 23, the controller 20 will allow the variation of the mixing ratio of the gas/air mixture as a function of the speed of the fan 14.

Other preferred actions initiated by the controller 20 in response to a detected improper function of the electrical or electronic sensor 23 are that the controller 20 generates a service signal indicating that the burner should be inspected by a service person, and/or that the controller 20 performs a calibration for the sensor gain of the electrical or electronic sensor 23, and/or that the gas burner 10 is shut down.

### List of reference signs

- 10: gas burner
- 11: burner chamber
- 12: flame
- 13: ionization sensor
- 14: fan
- 15: air duct
- 16: gas duct
- 17: regulating valve
- 18: safety valve
- 19: pressure regulator
- 20: controller
- 21: actuator
- 22: actuator
- 23: sensor
- 24: reference point
- 25: heat exchanger
- 26: temperature sensor
- 27: exhaust gas sensor
- 28: exhaust pipe

## Claims

1. Method for operating a gas burner (10), wherein during burner-on phases a gas/air mixture having a defined mixing ratio of gas and air is provided to a burner chamber (11) of the gas burner (10) for combusting the gas/air mixture within the burner chamber (11), wherein the gas/air mixture is provided by mixing an air flow sucked in by a fan (14) with a gas flow, and wherein the defined mixing ratio of the gas/air mixture is controlled by comparing an actual value of a signal provided by an electrical or electronic sensor (23) coupled to a gas duct (16) with a nominal value for the signal provided by the electrical or electronic sensor (23) and by generating a control variable for a gas valve (17) assigned to the gas duct (16) on basis of the control deviation between the actual value and the nominal value, wherein during burner-on phases the function of the electrical or electronic sensor (23) becomes checked by generating an input variable for an actuator (21) of the gas valve (17), by operating the gas valve (17) on basis of the input variable for the actuator (21) and by comparing an actual output signal provided by the electrical or electronic sensor (23) in response to this operation of the gas valve (17) with a nominal output signal expected in response to this operation of the gas valve (17), **characterized in that**
if a deviation between the actual output signal of the electrical or electronic sensor (23) and the nominal output signal is smaller than the threshold, a proper function of the electrical or electronic sensor (23), namely a tolerable change of the sensor gain or no change of the sensor gain, is detected,
if a deviation between the actual output signal of the electrical or electronic sensor (23) and the nominal output signal is greater than a threshold, an improper function of the electrical or electronic sensor 23, namely a non tolerable change of the sensor gain of the electrical or electronic sensor 23, is detected,
if an improper function of the electrical or electronic sensor (23), namely a non tolerable change of the sensor gain of the electrical or electronic sensor (23), is detected, the controller (20) initiates at least one defined action, namely the controller (20) performs at least a compensation for the sensor gain shift by a defined offset value.

2. Method as claimed in claim 1, **characterized in that** if an improper function of the electrical or electronic sensor (23), namely a non tolerable change of the sensor gain of the electrical or electronic sensor (23), is detected, the controller (20) blocks a variation of the mixing ratio of the gas/air mixture as a function on the speed of the fan (14), and if a proper function of the electrical or electronic sensor (23), namely a tolerable change of the sensor gain of the electrical or electronic sensor (23) is detected, the controller (20) allows the variation of the mixing ratio of the gas/air mixture as a function on the speed of the fan (14).

3. Method as claimed in claim 1 or 2, **characterized in that** if an improper function of the electrical or electronic sensor (23), namely a non tolerable change of the sensor gain of the electrical or electronic sensor (23), is detected, the controller (20) generates a service signal indicating that the burner should be inspected by a service person, and/or that the controller (20) performs a calibration for the sensor gain of the electrical or electronic sensor (23), and/or that the gas burner (10) is shut down.

## Patentansprüche

1. Verfahren zum Betrieb eines Gasbrenners (10), wobei in Phasen, in welchen der Brenner eingeschaltet ist, einer Brennkammer (11) des Gasbrenners (10) ein Gas-Luft-Gemisch, das ein definiertes Mischverhältnis von Gas und Luft aufweist, bereitgestellt wird zur Verbrennung des Gas-Luft-Gemischs in der Brennkammer (11), wobei das Gas-Luft-Gemisch bereitgestellt wird durch Mischen eines Luftstroms, der durch ein Gebläse (14) eingesaugt wird, mit einem Gasstrom, und wobei das definierte Mischverhältnis des Gas-Luft-Gemischs geregelt wird durch Vergleichen eines tatsächlichen Wertes eines Signals, das von einem elektrischen oder elektronischen Sensor (23) bereitgestellt wird, der mit einer Gasleitung (16) verbunden ist, mit einem Nominalwert für das Signal, das durch den elektrischen oder elektronischen Sensor (23) bereitgestellt wird, und durch Erzeugen einer Stellgröße für ein Gasventil (17), das der Gasleitung (16) zugeordnet ist, auf Grundlage der Regelabweichung zwischen dem tatsächlichen Wert und dem Nominalwert, wobei in Phasen, in welchen der Brenner eingeschaltet ist die Funktion des elektrischen oder elektronischen Sensors (23) überprüft wird durch Erzeugen einer Eingangsgröße für ein Stellglied (21) des Gasventils (17), durch Betätigen des Gasventils (17) auf Grundlage der Eingangsgröße für das Stellglied (21) und durch Vergleichen eines tatsächlichen Ausgangssignals, das durch den elektrischen oder elektronischen Sensor (23) als Reaktion auf diese Betätigung des Gasventils (17) bereitgestellt wird, mit einem nominalen Ausgangssignal, das als Reaktion auf diese Betätigung des Gasventils (17) zu erwarten ist,
**dadurch gekennzeichnet, dass**
eine einwandfreie Funktion des elektrischen oder elektronischen Sensors (23), nämlich eine annehmbare Veränderung der Sensorverstärkung oder keine Veränderung der Sensorverstärkung, festgestellt wird, falls eine Abweichung zwischen dem tatsächlichen Ausgangssignal des elektrischen oder elektronischen Sensors (23) und dem nominalen Ausgangssignal kleiner ist als der Grenzwert,
eine fehlerhafte Funktion des elektrischen oder elektronischen Sensors (23), nämlich eine nicht annehmbare Veränderung der Sensorverstärkung des elektrischen oder elektronischen Sensors (23), festgestellt wird, falls eine Abweichung zwischen dem tatsächlichen Ausgangssignal des elektrischen oder elektronischen Sensors (23) und dem nominalen Ausgangssignal größer ist als der Grenzwert,
der Regler (20) mindestens eine definierte Aktion einleitet, nämlich der Regler (20) mindestens eine Kompensation für die Veränderung der Sensorverstärkung durch einen definierten Offsetwert durchführt, falls eine fehlerhafte Funktion des elektrischen oder elektronischen Sensors (23), nämlich eine nicht annehmbare Veränderung der Sensorverstärkung des elektrischen oder elektronischen Sensors (23), festgestellt wird.

2. Verfahren nach Anspruch 1, **dadurch gekennzeichnet, dass** der Regler (20) eine Veränderung des Mischverhältnisses des Gas-Luft-Gemischs in Abhängigkeit der Geschwindigkeit des Gebläses (14) verhindert, falls eine fehlerhafte Funktion des elektrischen oder elektronischen Sensors (23), nämlich eine nicht annehmbare Veränderung der Sensorverstärkung des elektrischen oder elektronischen Sensors (23), festgestellt wird, und der Regler (20) die Veränderung des Mischverhältnisses des Gas-Luft-Gemischs in Abhängigkeit der Geschwindigkeit des Gebläses (14) zulässt, falls eine einwandfreie Funktion des elektrischen oder elektronischen Sensors (23), nämlich eine annehmbare Veränderung der Sensorverstärkung des elektrischen oder elektronischen Sensors (23), festgestellt wird.

3. Verfahren nach Anspruch 1 oder 2, **dadurch gekennzeichnet, dass** der Regler (20) ein Dienstsignal erzeugt, welches anzeigt, dass der Brenner durch eine Wartungsperson zu kontrollieren ist, und/oder dass der Regler (20) eine Kalibrierung für die Sensorverstärkung des elektrischen oder elektronischen Sensors (23) durchführt, und/oder dass der Gasbrenner (10) abgestellt wird, falls eine fehlerhafte Funktion des elektrischen oder elektronischen Sensors (23), nämlich eine nicht annehmbare Veränderung der Sensorverstärkung des elektrischen oder elektronischen Sensors (23), festgestellt wird.

## Revendications

1. Procédé pour faire fonctionner un brûleur à gaz (10), dans lequel pendant des phases de mise en fonctionnement de brûleur, un mélange air/gaz ayant un rapport de mélange défini de gaz et d'air est fourni à une chambre de combustion (11) du brûleur à gaz (10) pour brûler le mélange air/gaz dans la chambre de combustion (11), dans lequel le mélange air/gaz est fourni en mélangeant un flux d'air aspiré par un ventilateur (14) avec un écoulement gazeux, et dans lequel le rapport de mélange défini du mélange air/gaz est régulé en comparant une valeur réelle d'un signal fourni par un capteur électrique ou électronique (23) couplé à une conduite de gaz (16) avec une valeur nominale pour le signal fourni par le capteur électrique ou électronique (23) et en générant une variable de commande pour une soupape à gaz (17) attribuée à la conduite de gaz (16) sur la base de l'écart de régulation entre la valeur réelle et la valeur nominale, dans lequel pendant des phases de mise en fonctionnement de brûleur, la fonction du capteur électrique ou électronique (23) est vérifiée en générant une variable d'entrée pour un actionneur (21) de la soupape à gaz (17), en faisant fonctionner la soupape à gaz (17) sur la base de la variable d'entrée pour l'actionneur (21) et en comparant un signal de sortie réel fourni par le capteur électrique ou électronique (23) à la suite de cette opération de la soupape à gaz (17) avec un signal de sortie nominal attendu à la suite de cette opération de la soupape à gaz (17), **caractérisé en ce que**
si un écart entre le signal de sortie réel du capteur électrique ou électronique (23) et la valeur de sortie nominale est inférieur au seuil, une fonction correcte du capteur électrique ou électronique (23), à savoir un changement tolérable du gain de capteur ou aucun changement du gain de capteur, est détectée,
si un écart entre le signal de sortie réel du capteur électrique ou électronique (23) et la valeur de sortie nominale est supérieur à un seuil, une fonction incorrecte du capteur électrique ou électronique (23), à savoir un changement non tolérable du gain de capteur du capteur électrique ou électronique (23), est détectée,
si une fonction incorrecte du capteur électrique ou électronique (23), à savoir un changement non tolérable du gain de capteur du capteur électrique ou électronique (23), est détectée, le dispositif de commande (20) déclenche au moins une action définie, à savoir le dispositif de commande (20) effectue au moins une compensation pour le changement de gain de capteur par une valeur de décalage définie.

2. Procédé selon la revendication 1, **caractérisé en ce que,** si une fonction incorrecte du capteur électrique ou électronique (23), à savoir un changement non tolérable du gain de capteur du capteur électrique ou électronique (23), est détectée, le dispositif de commande (20) bloque une variation du rapport de mélange du mélange air/gaz en fonction de la vitesse du ventilateur (14) et, si une fonction correcte du capteur électrique ou électronique (23), à savoir un changement tolérable du gain de capteur du capteur électrique ou électronique (23), est détectée, le dispositif de commande (20) permet la variation du rapport de mélange du mélange air/gaz en fonction de la vitesse du ventilateur (14).

3. Procédé selon la revendication 1 ou 2, **caractérisé en ce que,** si une fonction incorrecte du capteur électrique ou électronique (23), à savoir un changement non tolérable du gain de capteur du capteur électrique ou électronique (23), est détectée, le dispositif de commande (20) génère un signal de service indiquant que le brûleur doit être inspecté par un technicien et/ou que le dispositif de commande (20) effectue un étalonnage du gain de capteur du capteur électrique ou électronique (23) et/ou que le brûleur à gaz (10) est éteint.
